# EUROPEAN PATENT APPLICATION

(11) **EP 1 782 965 A1**
(43) Date of publication of application: **09.05.2007**
(21) Application number: 06123511.5
(22) Date of filing: 06.11.2006
(51) Int. Cl.: B60B 3/04, B60B 3/10

(54) **A wheel for vehicles and method for the manufacture thereof**

(30) Priority: 07.11.2005 IT TO20050784
(71) Applicant: Magnetto Wheels S.p.A., 10098 Rivoli TO (IT)
(72) Inventor: Finzi, Andrea, I-20050, Triuggio (Milano) (IT); Bazzoni, Davide, I-21040, Cislago (Varese) (IT); Gotta, Giacomo, I-10080, Locana (Torino) (IT); Perris Magnetto, Gabriele, I-10098, Rivoli (Torino) (IT)
(74) Representative: Quinterno, Giuseppe

(57) **Abstract**

The wheel (1) comprises a rim (2) having an outer annular surface (2a) for supporting a tyre, and an inner annular surface (2b), and a disk (3) produced as a single sheet-metal piece by forming and punching and having a central portion (3a) which can be connected to an axle hub and from which a plurality of angularly spaced-apart spokes (3b) extend outwardly. The outer ends of adjacent spokes (3b) are interconnected by arcuate peripheral connecting bands (6) which extend substantially along arcs of a circle concentric with the axis (A-A) of the wheel (1). Corresponding holes (7) in the disk (3) are defined between pairs of adjacent spokes (3b) and the associated connecting bands (6a). Each connecting band (6) has a cylinder portion (6a) which is substantially parallel to the axis (A-A) of the wheel (1) and which is fitted against the inner annular surface (2b) of the rim (2).

Each connecting band (6) has a further portion (6b) axially adjacent the cylinder portion (6a) and facing outwardly relative to the wheel (1). The further portion (6b) has an arcuate cross-sectional profile which converges towards the axis (A-A) of the wheel (1) from the cylinder portion (6a).

## Description

The present invention relates to vehicle wheels.

More specifically, the subject of the invention is a vehicle wheel of the type defined in the introductory part of Claim 1.

A wheel of this type is described, for example, in EP 1 262 333 Al. This document describes and illustrates wheels in which the disk has a plurality of pairs of spokes the outer ends of which are interconnected by connecting bands which together form a perfectly cylindrical peripheral ring that is fitted on and fixed to the inner surface of the rim. The almost triangular holes defined between consecutive pairs of spokes have, in the region of their radially peripheral ends, respective edges which are punched in a plane substantially perpendicular to the axis of the wheel. The punching of these holes is therefore quite problematical and, in practice, has to be performed by means of two successive partial punching operations.

An object of the present invention is to propose a wheel of the type defined at the beginning which overcomes the above-described problems of the wheels of the prior art.

This and other objects are achieved according to the invention by a vehicle wheel the principal characteristics of which are defined in appended Claim 1.

A further subject of the present invention is a method for the manufacture of a disk for a wheel of this type, the principal characteristics of a method of this type being defined in appended Claim 5.

Further characteristics and advantages of the invention will become clear from the following detailed description which is given purely by way of non-limiting example with reference to the appended drawings, in which:

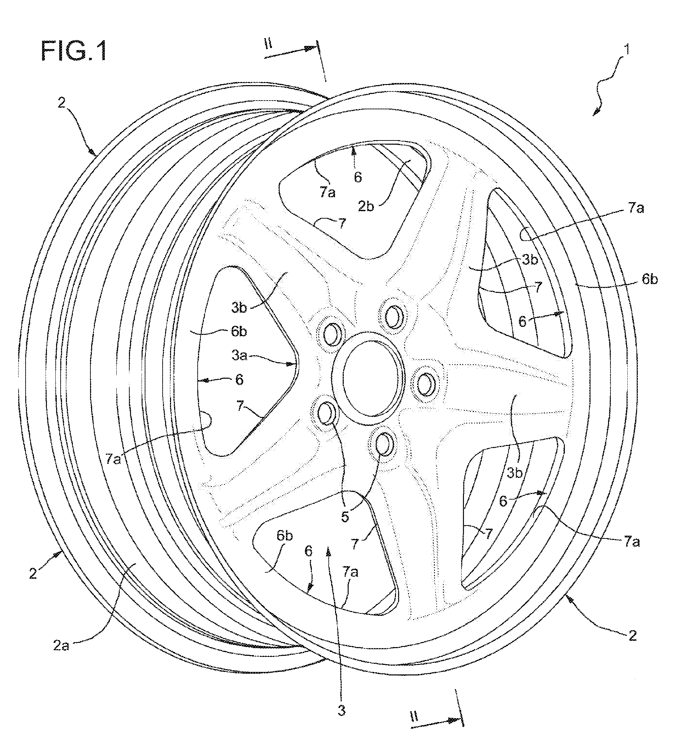

Figure 1 is a perspective view of a vehicle wheel according to the present invention,
Figure 2 is an axial section taken on the line II-II of Figure 1, and
Figure 3 is a partial schematic sectioned view which shows details of a vehicle wheel according to the present invention.

A vehicle wheel according to the invention is generally indicated 1 in the drawings.

The wheel 1 comprises, in known manner, a rim 2 to which a disk 3 is welded.

The rim 2 has an outer annular surface 2a for supporting a tyre (not shown) and an inner annular surface 2b.

The disk 3 is produced as a single sheet-metal piece by forming and punching operations. The disk has a central portion 3a for connection to an axle hub (not shown). In the embodiment shown, the portion 3a of the disk 3 has a central hole 4 and, around the hole 4, a plurality of holes 5 for the insertion of fixing bolts.

A plurality of angularly spaced-apart spokes 3b extend outwardly from the central portion 3a of the disk 3.

The outer ends of adjacent spokes 3b are interconnected by arcuate peripheral connecting bands 6 which are integral with the disk 3 and which extend along arcs of a circle concentric with the axis of the wheel 1.

In the disk 3, between pairs of adjacent spokes 3b and the associated connecting bands 6, are defined corresponding holes 7, which in the embodiment shown by way of example have an almost triangular shape with rounded corners.

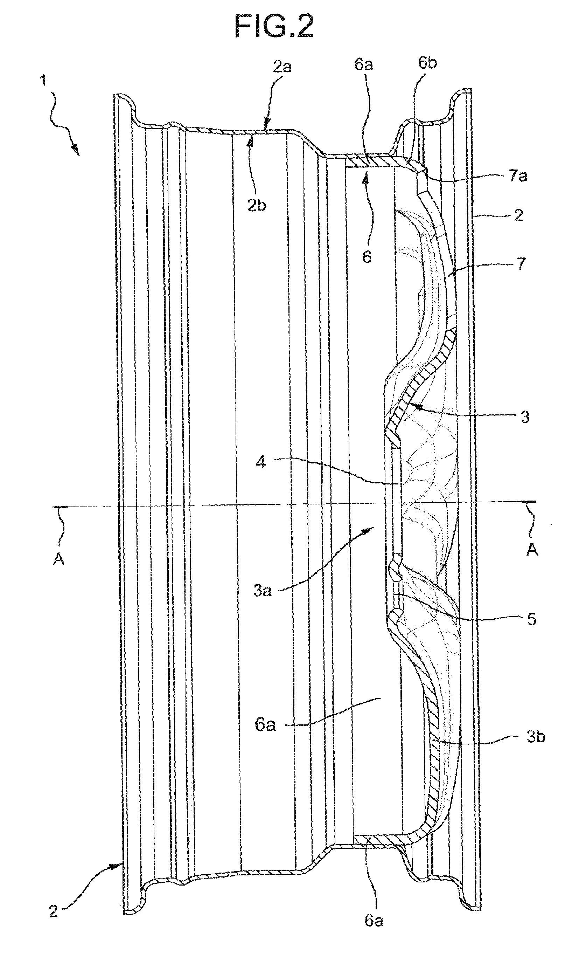

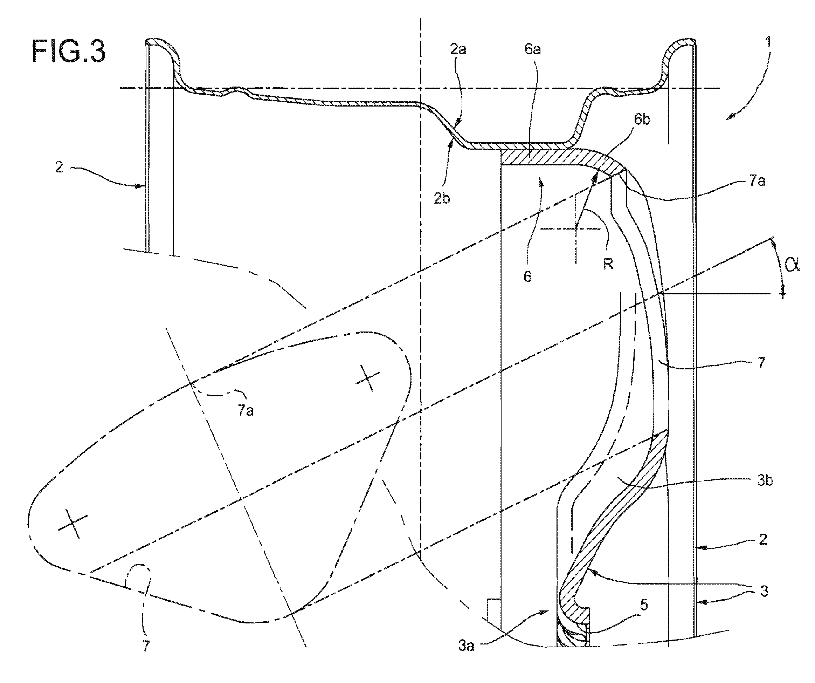

As can be seen in Figure 2 and even better in Figure 3, each of the connecting bands 6 has a respective cylinder portion 6a substantially parallel to the axis A-A of the wheel 1 (Figure 2).

In the embodiment shown by way of example, the cylinder portions 6a of the connecting bands 6 are connected to one another, forming a continuous cylindrical ring which is fitted against the inner annular surface 2b of the rim 2 and welded thereto in known manner. However, in embodiments not shown, the bands 6 may be separated from one another, for example, by peripheral notches of the disk 3.

As can be seen in Figures 2 and 3, each band 6 has a further portion 6b axially adjacent the cylinder portion 6a and facing outwardly relative to the wheel 1. This further portion 6b has an arcuate cross-sectional profile which converges towards the wheel axis A-A from the adjacent cylinder portion 6a.

The radially peripheral side 7a of the hole 7 advantageously extends at a distance from the wheel axis A-A which is less than the distance that separates the cylinder portions 6a of the bands 6 from that axis.

In the embodiment shown (see Figure 3 in particular) the arcuate portion 6b of each connecting band 6 has its convex side facing outwardly relative to the wheel and, in cross-section, has a radius of curvature, indicated R in Figure 3, preferably of between 1 and 5 cm.

A wheel disk 3 according to the present invention can be manufactured by forming and punching operations from a single metal sheet so as to produce the central portion 3a for connection to an axle hub, the at least partially cylindrical peripheral portion formed by the portions 6a of the bands 6 for connection to the surface 2b of the rim 2, and an intermediate annular portion. The holes 7 are produced by punching in the intermediate annular portion of the disk 3 so as to define the spokes 3b between them.

As can be appreciated from Figure 3, the holes 7 can be produced by a single punching operation in the intermediate annular portion of the disk, for example, along an axis which, in a transverse plane, is inclined at an angle α to an axis parallel to the axis A-A of the wheel 1.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A vehicle wheel (1), comprising:
a rim (2) having an outer annular surface (2a) for supporting a tyre, and an inner annular surface (2b), and
a disk (3) produced as a single sheet-metal piece by forming and punching and having a central portion (3a) adapted to be connected to an axle hub and from which a plurality of angularly spaced-apart spokes (3b) extend outwardly, the outer ends of adjacent spokes (3b) being interconnected by arcuate peripheral connecting bands (6) which extend substantially along arcs of a circle concentric with the axis (A-A) of the wheel (1), corresponding holes (7) in the disk (3) being defined between pairs of adjacent spokes (3b) and the associated connecting bands (6a), each connecting band (6) having a cylinder portion (6a) which is substantially parallel to the axis (A-A) of the wheel (1) and which is fitted against the inner annular surface (2b) of the rim (2),
the wheel (1) being **characterized in that** each connecting band (6) has a further portion (6b) axially adjacent the cylinder portion (6a) and facing outwardly relative to the wheel (1), the further portion (6b) having an arcuate cross-sectional profile which converges towards the axis (A-A) of the wheel (1) from the cylinder portion (6a).

2. A vehicle wheel according to Claim 1 in which the radially peripheral side (7a) of each hole (7) in the disk (3) extends at a distance from the axis (A-A) of the wheel (1) which is less than the distance that separates the cylinder portions (6a) of the connecting bands (6) from that axis (A-A).

3. A vehicle wheel according to any one of the preceding claims in which the further portion (6b) of each connecting band (6) is arcuate with its convex side facing outwardly relative to the wheel (1) and has, in cross-section, a radius of curvature (R) preferably of between 1 and 5 cm.

4. A vehicle wheel according to any one of the preceding claims in which the cylinder portions (6a) of the connecting bands (6) together form a continuous cylindrical ring.

5. A method for the manufacture of a disk (3) for a wheel (1) according to any one of the preceding claims by means of forming and punching operations from a metal sheet so as to produce a central portion (3a) for connection to an axle hub, an at least partially cylindrical peripheral portion formed by the portions (6a) for connection to the inner surface (2b) of the rim (2), and an intermediate annular portion in which a plurality of holes (7) are formed by punching, the holes being spaced apart angularly about the central portion (3a) so as to define a plurality of spokes (3b) between them,
the method being **characterized in that** the holes (7) are produced by a single punching operation in the intermediate annular portion of the disk.

6. A method according to Claim 5 in which the holes (7) are punched in a manner such that each hole (7) in the disk (3) has a radially peripheral side (7a) which extends at a distance from the axis (A-A) of the wheel (1) which is less than the distance between that axis (A-A) and the cylinder portions (6a) of the bands (6).

7. A method according to Claim 5 or 6 in which each connecting band (6) is formed with an arcuate portion (6b) having its convex side facing outwardly relative to the wheel (1) and having, in cross-section, a radius of curvature (R) preferably of between 1 and 5 cm.

8. A method according to any one of Claims 5 to 7 in which the connecting bands (6) are formed in a manner such that their cylinder portions (6a) together form a continuous cylindrical ring.
